(19) Europäisches Patentamt
European Patent Office
Office européen des brevets

(11) **EP 2 783 970 B1**

(12) **EUROPEAN PATENT SPECIFICATION**

(45) Date of publication and mention
of the grant of the patent:
**13.01.2021 Bulletin 2021/02**

(51) Int Cl.:
***B62M 6/45*** (2010.01)

(21) Application number: **14161473.5**

(22) Date of filing: **25.03.2014**

(54) **CONTROLLER FOR ELECTRIC BICYCLE, POWER UNIT FOR ELECTRIC BICYCLE, AND ELECTRIC BICYCLE**

Steuerung für Elektrofahrrad, Antriebseinheit für Elektrofahrrad und Elektrofahrrad

Contrôleur pour bicyclette électrique, unité de puissance pour bicyclette électrique et bicyclette électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 JP 2013071557**

(43) Date of publication of application:
**01.10.2014 Bulletin 2014/40**

(73) Proprietor: **Yamaha Hatsudoki Kabushiki Kaisha Iwata-shi, Shizuoka 438-8501 (JP)**

(72) Inventors:
• **Arimune, Nobuyasu**
  **Iwata-shi, Shizuoka 438-8501 (JP)**
• **Kinpara, Yuki**
  **Iwata-shi, Shizuoka 438-8501 (JP)**

(74) Representative: **Grünecker Patent- und Rechtsanwälte PartG mbB Leopoldstraße 4 80802 München (DE)**

(56) References cited:
EP-A1- 0 818 386          EP-A1- 0 893 338
EP-A2- 1 188 660          WO-A1-2012/086458
JP-A- H10 114 292         JP-A- 2001 080 569
JP-A- 2004 322 809        JP-A- 2005 335 405
US-A- 5 664 636           US-A1- 2005 029 031

**Description**

TECHNICAL FIELD

The present invention relates to a controller for an electric bicycle, a power unit for an electric bicycle, and an electric bicycle.

BACKGROUND

A controller, which generates smooth motor torque in response to pedal torque input to pedals on which a driver steps by feet, has been known in International Publication No. WO2011/138138.

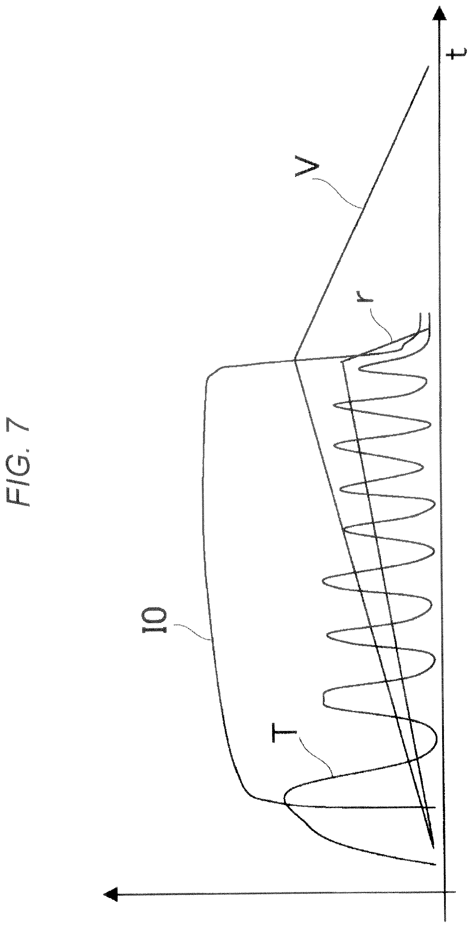

Fig. 7 is a diagram showing an current effective value that is supplied to an electric motor from such a controller. In Fig. 7, a horizontal axis represents elapsed time [sec] and a vertical axis represents the magnitude of the signal. Reference character T denotes the magnitude of pedal torque, reference character r denotes crank rotation speed, and reference character V denotes vehicle speed.

As shown in Fig. 7, pedal torque periodically and significantly changes when a driver steps on pedals. Then, the above-mentioned controller smoothes the changing signal and supplies power, which corresponds to the smoothed signal, to the motor. Therefore, even though torque input to pedals on which the driver steps changes, the variation of power supplied to the electric motor is small, so that the variation of an assist force caused by the electric motor is small.

According to an electric bicycle on which this controller is mounted, even though the driver is driving the electric bicycle on a flat road, the driver feels that the the electric bicycle travels on a road having low surface resistance or travels on a downhill road. In this way, a burden on the driver is reduced. In addition, a variation corresponding to pedal torque input to the pedals on which the driver steps remains in driving torque of the electric bicycle output from a wheel (resultant torque obtained by adding pedal torque to motor torque). For this reason, a riding feeling of a bicycle is also ensured.

However, in such an electric bicycle, when the driver wants driving torque, driving torque (resultant torque) requested by the driver is not instantly obtained. The reason for this is that power supplied to the electric motor is smoothed. Accordingly, an uncomfortable feeling is felt by the driver.

Then, when the degree of smoothing is reduced for the improvement of responsiveness to the driver's request for driving torque, the variation of speed is increased in this case as compared to a case in which smoothing is sufficient. Since the bicycle is always being accelerated or decelerated and a riding feeling deteriorates in this case, the burden on a driver is increased preferably.

A controller for an electric bicycle that generates assist torque by an electric motor that conforms to the preamble of independent claim 1 is disclosed in JP 2005 335405 A.

SUMMARY

Illustrative aspects of the invention, which invention is defined by the claims, provides a controller and a switch for an electric bicycle, a power unit for an electric bicycle, and an electric bicycle that improves responsiveness to a driver's request for driving torque while reducing a burden on a driver by smoothing torque generated by an electric motor to ensure a riding feeling of a bicycle.

According to one illustrative aspect of the invention, there is provided a controller for an electric bicycle that generates assist torque by an electric motor, the controller comprising:

a control unit that supplies power to the electric motor according to a signal output from a pedal torque detecting part detecting torque input to pedals, wherein the control unit includes:

a smooth power generation part that generates power of which period is longer than the period of the signal output from the pedal torque detecting part and which is smoothed, and a boost power generation part that generates power, of which a variation per period of the signal output from the pedal torque detecting part is larger than a variation of the smoothed power per period of the signal, in response to a parameter that is changed by a driver's operation when a boost is requested.

According to the controller for an electric bicycle of the invention, a riding feeling of a bicycle is ensured by the smooth power that is generated by the smooth power generation part and a burden on a driver is reduced. Further, power of which a variation per period of the signal output from the pedal torque detecting part detecting torque input to the pedals is large is generated in response to a driver's boost request for driving torque by the boost power generation part. For this reason, since motor torque is generated by power that changes in response to one period of the pedal, responsiveness to a boost request is improved while the riding feeling of a bicycle is ensured.

According to the controller for the electric bicycle of the invention, the boost power generation part generates power that changes in response to the period of the signal.

According to the controller for the electric bicycle of the invention, the motor torque corresponding to the driver's boost request for the driving torque is easily obtained by the power that changes in response to the period of the signal output from the pedal torque detecting part.

According to the controller for the electric bicycle of the invention, the controller further comprises a switch operable by a driver to produce a signal indicating a boost request and the parameter that is changed by a driver's operation when a boost is requested is the signal indicating the boost request the parameter, which is changed by the driver's operation when the boost is requested, the signal indicating the boost request.

BRIEF DESCRIPTION OF THE DRAWINGS

Fig. 1 is a right side view of an electric bicycle according to a first exemplary embodiment of the invention.
Fig. 2 is a block diagram of the electric bicycle of Fig. 1.
Fig. 3 is a block diagram of a controller shown in Fig. 1.
Fig. 4 is a flowchart of control performed by a motor control unit.
Fig. 5 is a block diagram of a controller of an electric bicycle according to a related example that is not claimed but nonetheless useful for understanding the invention.
Fig. 6 is a schematic diagram showing an effective power value, pedal torque, crank rotation speed, and vehicle speed of the electric bicycle according to the related example.
Fig. 7 is a schematic diagram showing an effective power value, pedal torque, crank rotation speed, and vehicle speed of an electric bicycle according to a reference example.

DETAILED DESCRIPTION

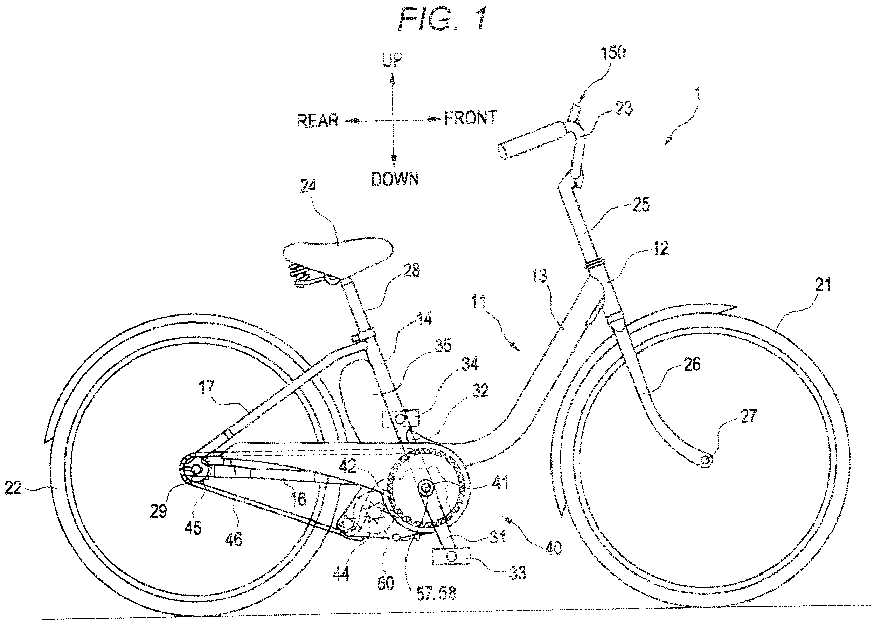

Exemplary embodiments of the invention will now be described with reference to the drawings, along with a related example that does not fall within the scope of the claims but that is nonetheless useful for understanding the invention. A first exemplary embodiment of the invention will be described below with reference to Figs. 1 to 3. The dimensions of elements of each drawing do not truly represent the dimensions of actual elements and ratios of the dimensions of each element.

In the following description, the front, the rear, the left, and the right mean the front, the rear, the left, and the right views from a driver who is seated on a seat 24 of an electric bicycle while gripping a handlebar 23.

(Entire structure of electric bicycle)

Fig. 1 shows the schematic structure of an electric bicycle according to a first exemplary embodiment.

The electric bicycle is driven by driving torque that is obtained by adding pedal torque, which is generated when a driver steps on pedals 33 and 34, to motor torque that is output from an electric motor 60. The motor torque of the electric motor is assist torque that assists an operation of the driver stepping on the pedals 33 and 34.

As shown in Fig. 1, the electric bicycle includes a vehicle body frame 11 that extends in a longitudinal direction. Further, the electric bicycle includes a front wheel 21, a rear wheel 22, a handlebar 23, a seat 24, and a power unit 40.

The vehicle body frame 11 includes a head pipe 12, a down frame 13, a seat frame 14, a pair of chain stays 16, and a pair of seat stays 17. The head pipe 12 is disposed at the front portion of the electric bicycle. The front portion of the down frame 13, which extends rearward, is connected to the head pipe 12. The seat frame 14 is connected to the rear portion of the down frame 13, and extends upward and obliquely rearward from the rear end portion of the down frame 13.

A handlebar stem 25 is rotatably inserted into the head pipe 12. The handlebar 23 is fixed to the upper end portion of the handlebar stem 25. Front forks 26 are fixed to the lower end portion of the handlebar stem 25. The front wheel 21 is rotatably supported at the lower end portions of the front forks 26 by an axle 27.

A seat pipe 28 is inserted into the cylindrical seat frame 14. The seat 24 is provided at the upper end portion of the seat pipe 28.

The pair of chain stays 16 is provided so as to sandwich the rear wheel 22 from the left and right sides. The pair of chain stays 16 extends toward the center of rotation of the rear wheel 22 from the rear portion of the down frame 13. The pair of seat stays 17 extends toward the center of rotation of the rear wheel 22 from the upper portion of the seat frame 14. The rear wheel 22 is rotatably supported at the rear end portions of the chain stays 16 and the seat stays 17 by a driving shaft 29.

A battery 35, which supplies power to the electric motor 60 of the power unit 40, is disposed in the rear of the seat frame 14. The battery 35 includes a rechargeable battery (not shown) that can be discharged and charged and a battery control unit. The battery control unit controls the charge and discharge of the rechargeable battery, and monitors an output current, residual capacity, and the like of the battery.

The power unit 40 includes a crankshaft 41, a driving sprocket 42, a driven sprocket 45, a chain 46, the electric motor 60, a pedal torque detecting part 57, and a crank rotation detecting part 58.

The crankshaft 41 is rotatably provided at the lower portion of the seat frame 14. The crankshaft 41 is provided so as to extend in a lateral direction. Crank arms 31 and 32 are mounted on both end portions of the crankshaft 41. The pedals 33 and 34 are rotatably mounted on the tips of the crank arms 31 and 32. The pedal torque detecting part 57 detects pedal torque that is input into the crankshaft 41 through the pedals 33 and 34 by a driver. The crank rotation detecting part 58 detects the rotation of the crankshaft 41 when the driver rotates the pedals 33 and 34.

The driving sprocket 42 is mounted on one side of the crankshaft 41. The driving sprocket 42 is rotated together with the crankshaft 41. The driven sprocket 45 is provided coaxially with the driving shaft 29 of the rear wheel 22. The driven sprocket 45 is connected to the rear wheel 22 through a one-way clutch (not shown).

The endless chain 46 is wound around the driving sprocket 42 and the driven sprocket 45. Accordingly, when the driver steps on the pedals 33 and 34, the driving sprocket 42 is rotated. In addition, the rotation of the driving sprocket 42 is transmitted to the driven sprocket 45 through the chain 46, so that the rear wheel 22 is driven.

The electric motor 60 is fixed to the vehicle body frame 11 near the crankshaft 41. An output shaft of the electric motor 60 is provided with an auxiliary sprocket 44. Power is supplied to the electric motor 60 from the battery 35. When power is supplied to the electric motor 60, the electric motor 60 can be driven. The rotation of the electric motor 60 is transmitted to the chain 46 through the auxiliary sprocket 44. In this way, when the power is supplied to the electric motor 60, the motor torque is generated in the electric motor 60. The motor torque is transmitted to the rear wheel 22 through the chain 46.

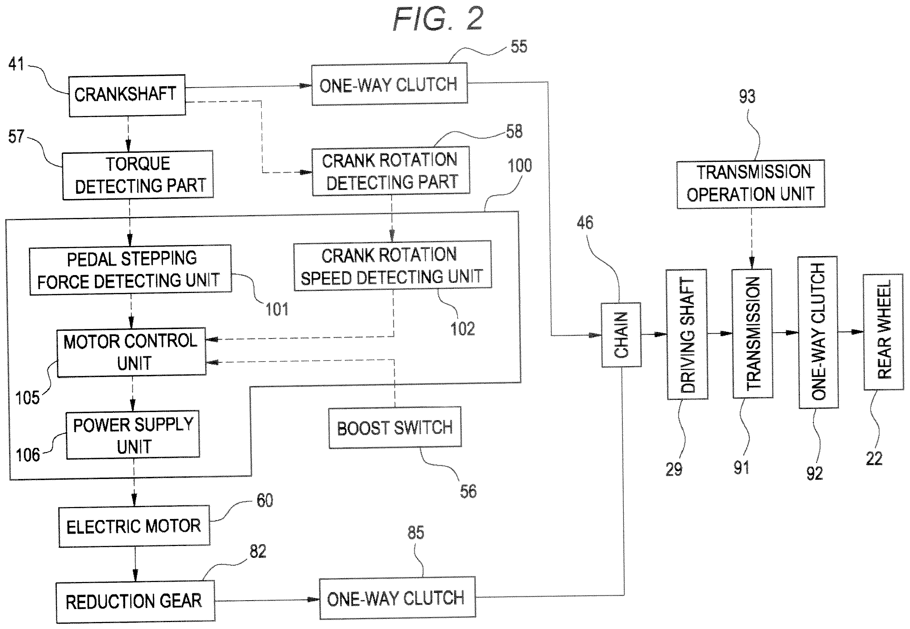

The electric bicycle controls the electric motor 60 by a controller 100 (an example of a controller for an electric bicycle), and applies the driving torque, which is obtained by combining the pedal torque with the motor torque, to the wheel. Fig. 2 is a block diagram illustrating the transmission of power and the transfer of a signal in the electric bicycle according to this embodiment.

As shown in Fig. 2, the controller 100 includes a pedal stepping force detecting unit 101, a crank rotation speed detecting unit 102, a motor control unit 105, and a power supply unit 106. Further, the electric bicycle includes a boost switch 56, the pedal torque detecting part 57, and the crank rotation detecting part 58.

(Power transmission path)

A power transmission path will be described first.

When the driver rotates the crankshaft 41 by stepping on the pedals 33 and 34, the rotation of the crankshaft 41 is transmitted to the chain 46 through the one-way clutch 55. The one-way clutch 55 transmits only the normal rotation of the crankshaft 41 to the chain 46 and does not transmit the reverse rotation of the crankshaft 41 to the chain 46.

The rotation of the chain 46 is transmitted to the driving shaft 29 of the rear wheel 22. The rotation of the driving shaft 29 is transmitted to the rear wheel 22 through a transmission 91 and a one-way clutch 92.

The transmission 91 is a mechanism that can change transmission gear in response to a transmission operation unit 93 operated by a driver.

The one-way clutch 92 transmits the rotation of the driving shaft 29 to the rear wheel 22 only when the rotation speed of the driving shaft 29 is higher than the rotation speed of the rear wheel 22. When the rotation speed of the driving shaft 29 is lower than the rotation speed of the rear wheel 22, the one-way clutch 92 does not transmit the rotation of the driving shaft 29 to the rear wheel 22. Further, the one-way clutch 92 also does not transmit the rotation of the reverse rotation of the rear wheel 22 to the driving shaft 29.

The rotation of the electric motor 60 is transmitted to the one-way clutch 85 through a reduction gear 82. The one-way clutch 85 transmits the rotation, which corresponds to only a direction in which the reduction gear 82 rotates the chain 46 in the normal rotation, to the chain 46 and does not transmit the rotation, which corresponds to a direction in which the reduction gear 82 rotates the chain 46 in the reverse rotation, to the chain 46.

As described above, in the electric bicycle according to this embodiment, the pedal torque input to the crankshaft 41 and the motor torque of the electric motor 60 are combined with each other by the chain 46.

(Path of signal)

Next, a path of a signal will be described.

When the driver rotates the crankshaft 41, the pedal torque detecting part 57 provided on the vehicle generates a signal corresponding to the pedal torque that is input to the crankshaft 41. The pedal torque detecting part 57 inputs the signal to the pedal stepping force detecting unit 101.

The pedal stepping force detecting unit 101 converts the signal, which is input from the pedal torque detecting part 57, into the pedal torque that is applied to the pedals 33 and 34 by the driver. The pedal stepping force detecting unit 101 inputs the value of the pedal torque to the motor control unit 105. The pedal torque is a value that periodically changes. Specifically, the pedal torque is smallest when the pedals 33 and 34 are positioned at a top dead center and a bottom dead center, and is largest when the pedals 33 and 34 are positioned in the middle between the top dead center and the bottom dead center. One period of the pedal torque corresponds to a half rotation of the crankshaft 41.

The crank rotation detecting part 58 is a sensor that detects the phase of the crankshaft 41. The crank rotation detecting part 58 generates a signal corresponding to the phase of the crankshaft 41. The crank rotation detecting part 58 inputs the signal to the crank rotation speed detecting unit 102.

The crank rotation speed detecting unit 102 converts the signal, which is input from the crank rotation detecting part 58, into crank rotation speed, which is applied to the pedals 33 and 34 by the driver, by the time differentiation of the phase information of the crankshaft 41 that is input from the crank rotation detecting part 58. The crank rotation speed detecting unit 102 inputs the crank rotation speed to the motor control unit 105.

The boost switch 56 is connected to the motor control unit 105. The boost switch 56 is an ON/OFF switch. When the driver turns on the boost switch 56, an ON signal of the boost switch 56 is input to the motor control unit 105. The boost switch 56 is pressed when the driver temporarily needs increace of the assist force of the electric motor 60. When the driver stops pressing the boost switch 56, the boost switch 56 inputs an OFF signal to the motor control unit 105.

The motor control unit 105 calculates a command value in response to the pedal torque, and outputs the command value to the power supply unit 106. The power supply unit 106 supplies power, which corresponds to the command value, to the electric motor 60 from the battery 35. That is, the motor control unit 105 makes the power supply unit 106 generate power that is to be supplied to the electric motor 60. The power supply unit 106 supplies power to the electric motor 60 so that the electric motor 60 generates motor torque.

For example, the motor control unit 105 calculates motor torque M ($M=k \cdot P$) that is obtained by multiplying pedal torque P by a constant assist ratio k, and outputs a command value, which corresponds to the motor torque M, to the power supply unit 106. The assist ratio k may change according to an assist mode that is selected by a driver. For example, a strong assist mode, a weak assist mode, and unassisted mode may be selected as the assist mode.

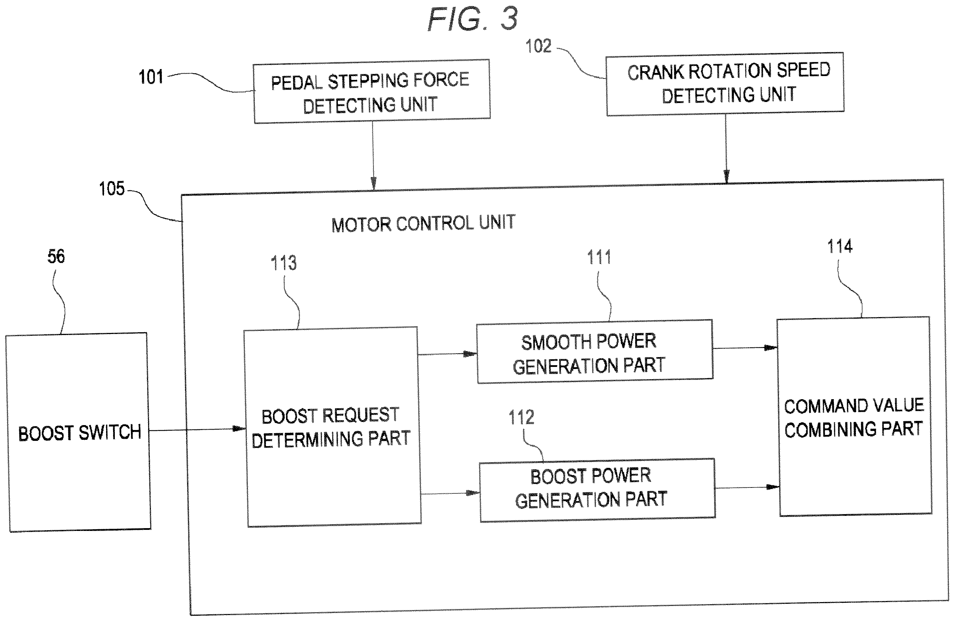

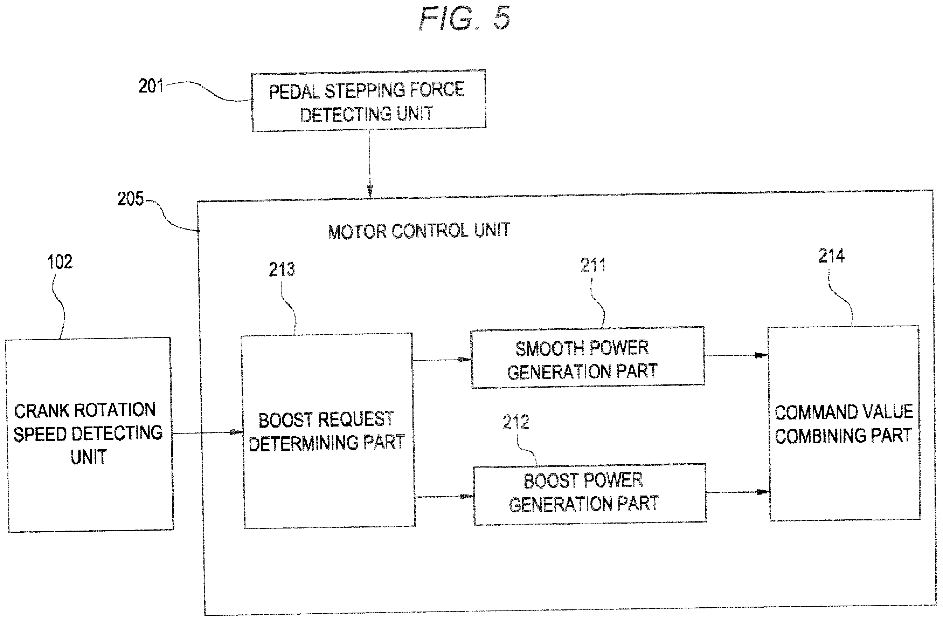

On the basis of the above-mentioned configuration, the controller 100 (an example of a control unit) generates power, which is to be supplied to the electric motor 60, in response to the pedal torque that is a signal output from the pedal torque detecting part 57. Next, the working of the motor control unit 105 will be described with reference to Figs. 3 and 5.

(Working of smooth power generation part)

Fig. 3 is a block diagram of the motor control unit 105.

As shown in Fig. 3, the motor control unit 105 (an example of a control unit) includes a smooth power generation part 111, a boost power generation part 112, a boost request determining part 113, and a command value combining part 114.

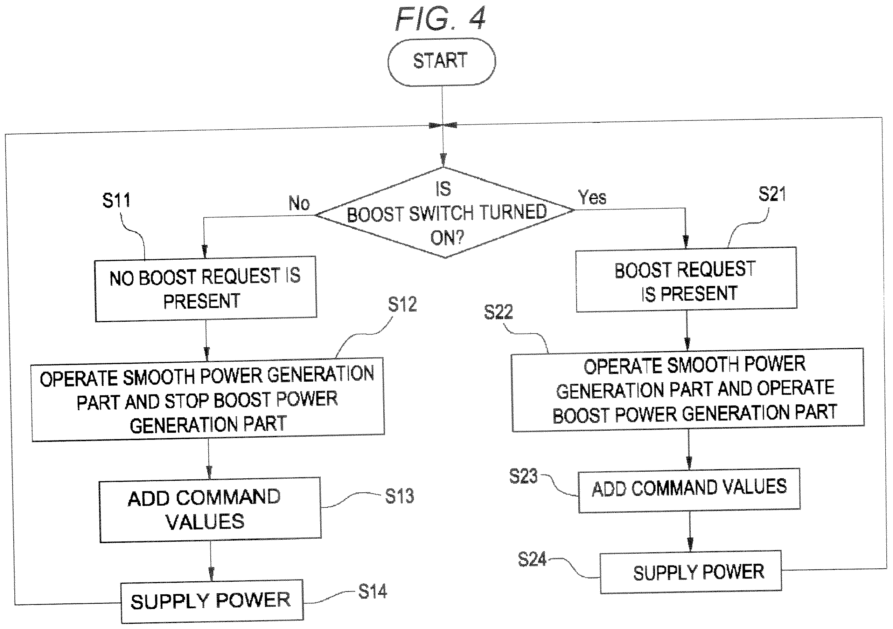

Fig. 4 is a flowchart of control performed by the motor control unit 105.

When the driver does not want to boost the driving torque, the boost switch 56 is not operated. In this state, the boost switch 56 inputs an OFF signal to the boost request determining part 113.

In this state, the OFF signal is input from the boost switch 56. Thus, as shown in Fig. 4, the boost request determining part 113 determines that there is no boost request (Step S11). Further, the boost request determining part 113 operates only the smooth power generation part 111 without operating the boost power generation part 112 (Step S12).

The smooth power generation part 111 generates smoothed power in response to the pedal torque. Meanwhile, power corresponding to a command value, which is generated by the smooth power generation part 111, is referred to as smooth power in the following description. In this embodiment, the smooth power generation part 111 generates smooth power of which period is longer than the period of a signal input from the pedal torque detecting part 57 and which is smoothed. A well-known technique disclosed in, for example, Japanese Patent Publication No. JP-A-2004-314753 may be employed as a method of calculating the smooth power.

The command value combining part 114 adds a command value, which is output from the smooth power generation part 111, to a command value that is output from the boost power generation part 112. Then, the command value combining part 114 outputs the total command value to the power supply unit (Step S13). When it is determined that there is no boost request, the command value output from the boost power generation part 112 is 0. Thus, the command value combining part 114 receives a command value that is output from the smooth power generation part 111, and outputs this command value to the power supply unit 106. The power supply unit 106 supplies smooth power to the electric motor 60 on the basis of the command value that is output from the smooth power generation part 111 (Step S14).

(Working of boost power generation part)

On the other hand, when the driver wants to temporarily increase the driving torque, the driver turns on the boost switch 56. Then, the ON signal of the boost switch 56 is input to the boost request determining part 113. When the ON signal of the boost switch 56 is input to the boost request determining part 113, the boost request determining part 113 determines that there is a boost request (Step S21). In addition, the boost request determining part 113 operates the smooth power generation part 111 and the boost power generation part 112 (Step S22). A signal, which is input to the boost request determining part 113 from the boost switch 56, is the parameter that is changed by the driver's operation when a boost is requested according to the invention.

The boost power generation part 112 generates power of which a variation per period of the signal output from the pedal torque detecting part 57 is larger than a variation of smooth power per period of the signal output from the pedal torque detecting part 57. Meanwhile, power, which corresponds to a command value generated by the boost power generation part 112 when a boost is requested, is referred to as boost power in the following description.

The command value combining part 114 adds the command value, which is output from the smooth power generation part 111, to the command value that is output from the boost power generation part 112 (Step S23). When it is determined that there is a boost request, command values are output from both the smooth power generation part 111 and the boost power generation part 112. For this reason, a total command value, which is output to the power supply unit 106 from the command value combining part 114, includes a smooth component that is caused by the smooth power generation part 111 and a boost component that is caused by the boost power generation part 112. The power supply unit 106 supplies power, which corresponds to the total command value, to the electric motor 60 (Step S24).

Meanwhile, when the driver removes a finger from the boost switch 56, the boost switch 56 inputs an OFF signal to the boost request determining part 113. Then, the boost request determining part 113 determines that there is no boost request, and stops the working of the boost power generation part 112.

In this embodiment, the boost power generation part 112 calculates target motor torque by multiplying the pedal torque by an assist ratio k and supplies power, which corresponds to the target motor torque, to the electric motor 60. Meanwhile, the pedal torque, which is employed for the calculation of the target motor torque by the boost power generation part 112, is not an average value and pedal torque itself that is converted from the signal of the pedal torque detecting part 57 by the pedal stepping force detecting unit 101. In other words, boost power is power that changes in response to the pedal torque changing every half rotation of the pedal.

For this reason, the boost power changes in a short time as compared to the smooth power of which period is longer than the period of the pedal torque. When the boost power Pb and the smooth power Pa are compared with each other, a variation ΔPb of the boost power per period of the signal output from the pedal torque detecting part 57 is larger than a variation ΔPa of the smooth power Pa per period of the signal output from the pedal torque detecting part 57.

(Advantages)

As described above, according to the electric bicycle of this embodiment, the assist force is generated in the electric motor 60 by the power output from the smooth power generation part 111 when there is no boost request. Accordingly, the driving torque that is obtained by adding motor torque to pedal torque is obtained, so that a burden on the driver is reduced.

Further, since the power supplied to the electric motor 60 is smoothed, the driver can obtain motor torque regardless of the positions of the pedals 33 and 34. For example, since motor torque is obtained even when the pedals 33 and 34 are positioned at the top dead center or the bottom dead center, the driver can comfortably drive the electric bicycle.

Furthermore, the electric bicycle according to this embodiment includes the boost power generation part 112. When the driver turns on the boost switch 56, the boost power is supplied to the electric motor 60 in addition to the smooth power that is output when the boost is not requested, and large driving torque is obtained.

In addition, the variation ΔPb of the boost power Pb per period of the pedal torque is larger than the variation ΔPa of the smooth power Pa per period of the pedal torque. That is, the boost power Pb more quickly changes than the smooth power Pa in response to the driver's operation for stepping on the pedals 33 and 34. Since the motor torque quickly changes in response to the operation for stepping on the pedals 33 and 34 when a boost is requested, the responsiveness to the driver's boost request for the driving torque is improved.

Meanwhile, it is also considered that it is possible to accede to a driver's boost request by merely providing the boost switch and increasing the driving torque when the driver wants to obtain high driving torque. However, it is normal that the amount of a boost required by the driver varies according to circumstances. For this reason, if assist torque is not obtained according to the driver's intention, there is a concern that an uncomfortable feeling is given to the driver.

However, according to the electric bicycle of this embodiment, the variation of the boost power per period of the signal output from the pedal torque detecting part 57 is larger than the variation of the smooth power per period of the signal output from the pedal torque detecting part 57. Accordingly, since the boost power quickly changes in response to the driver's operation for stepping on the pedals 33 and 34, motor torque is applied according to the driver's intention. In other words, when the driver' quickly rotates the pedals 33 and 34, in response to these operations, the motor torque is quickly changed and thus, the responsiveness is improved.

As described above, according to the electric bicycle of this embodiment, the burden on the driver is reduced and the responsiveness to the driver's boost request for the driving torque is improved while a riding feeling of the bicycle is ensured.

In the above-mentioned embodiment, the boost power is a value corresponding to the motor torque that is obtained by multiplying the pedal torque by an assist ratio k. Thus, the boost power output from the boost power generation part 112 changes in response to the period of the signal that is output from the pedal torque detecting part 57. Likewise, the boost power, which is output from the boost power generation part 112, changes in response to the amplitude of the signal that is output from the pedal torque detecting part 57. Since the boost power changes in response to the speed of the pedals 33 and 34 on which the driver steps or the magnitude of the driver's force stepping on the pedals 33 and 34, the assist force boosted in response to the driver's request is obtained.

<Modifications>

The invention has been described above using the first exemplary embodiment, but the technical scope of the invention is not limited to the described scope of the above-mentioned embodiment, but by the scope defined in the claims. It is apparent for those skilled in the art that the exemplary embodiment may have various changes and improvements.

An example in which the boost power generation part 112 is operated together with the smooth power generation part 111 when the boost is requested has been described in the above-mentioned embodiment. However, when the boost is requested, the working of the smooth power generation part 111 may be stopped and only the boost power generation part 112 may work.

Further, an example in which the boost power is supplied when the assist force is generated in the electric motor 60 has been described in the above-mentioned embodiment, but the invention is not limited to this example. For example, when the driver wants to temporarily stop the working of the electric motor 60, the boost power having a negative value may be applied to the smooth power having a positive value.

Furthermore, the method of determining the boost power, which is output from the boost power generation part 112, is also not limited to the above-mentioned example. As long as it is possible to make the power supply unit 106 output power, of which variation per period of the signal output from the pedal torque detecting part 57 is larger than the variation of the smooth power per period of the signal, in response to a parameter that is changed by the driver's operation when the boost is requested, the invention is not limited to the above-mentioned example.

(Input means for boost request)

Moreover, the boost switch 56, which is an ON/OFF switch, has been described as an example of means for inputting the driver's intention for the boost to the motor control unit 105 in the above-mentioned first exemplary embodiment, but the invention is not limited to this example. A slide switch, a throttle unit, or a volume switch may be used instead of the above-mentioned ON/OFF switch. The driver can input an intention for the boost and the magnitude of the required boost to the motor control unit 105.

<Related example that is not claimed>

Further, a boost power generation part of an electric bicycle according to a related example that is not part of the invention described below outputs boost power in response to the crank rotation speed. A difference between the electric bicycle according to the related example and the electric bicycle according to the above-mentioned first exemplary embodiment will be described below. The description of elements and workings common to the electric bicycle according to the second exemplary embodiment and the electric bicycle according to the first exemplary embodiment will be omitted.

Fig. 5 is a block diagram of a motor control unit 205 of the electric bicycle according to the second exemplary embodiment. The motor control unit 205 includes a smooth power generation part 211, a boost power generation part 212, a boost request determining part 213, and a command value combining part 214.

In the electric bicycle according to the related example, the crank rotation speed from the crank rotation speed detecting unit 102 is input to the boost request determining part 213. The boost request determining part 213 determines that no boost request is present when crank rotation speed r [rpm] is equal to or higher than a predetermined speed R [rpm], and determines that a boost request is present when the crank rotation speed r [rpm] is lower than the predetermined speed R [rpm]. In this related example, a parameter, which is changed by the driver's operation when the boost is requested, is the rotation speed of the crankshaft 41.

When the boost request determining part 213 determines that no boost request is present in this related example, the smooth power generation part 211 outputs a command value that makes the power supply unit 106 generate smooth power of which period is longer than the period of the signal out from the pedal torque detecting part 57.

When the boost request determining part 213 determines that there is a boost request, the boost power generation part 212 outputs a command value that generates boost power of which variation per period of the signal output from the pedal torque detecting part 57 is larger than the variation of the smooth power per period of the signal output from the pedal torque detecting part 57.

When the boost request determining part 213 determines that the boost request is present, the command value combining part 214 calculates a resultant command value C by combining a command value Ca output from the smooth power generation part 211 with a command value Cb output from the boost power generation part 212 according to the following expression 1.

$$C = Ca + (1-r/R) \times Cb \qquad \text{(Expression 1)}$$

Here, R is the predetermined speed [rpm] of the crank rotation speed that is used for the determination of the boost request as described above, and r is the crank rotation speed.

As described above, in this related example, the command value combining part 214 increases a ratio of the command value Cb output from the boost power generation part 212 when the crank rotation speed r is low, and increase a ratio of the command value Ca output from the smooth power generation part 211 when the crank rotation speed r is high.

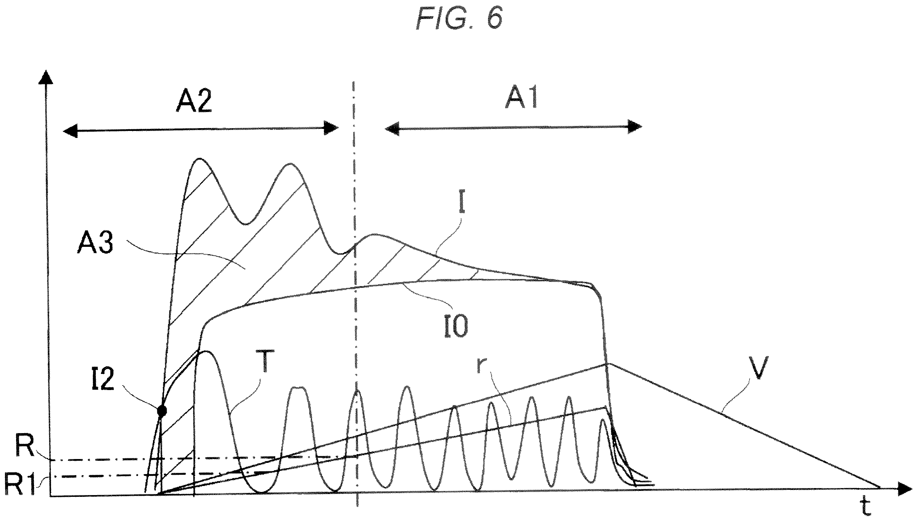

Fig. 6 is a schematic diagram showing an current effective value I [Arms] supplied to the electric motor 60, an output value T [V] of the pedal torque detecting part 57, the crank rotation speed r [rpm], and vehicle speed V [km/h] in the electric bicycle according to this related example. Meanwhile, the current effective value I is a value that is obtained by dividing the maximum amplitude Imax of current supplied to the electric motor 60 by a square root of 2 (I = Imax / $\sqrt{2}$). In Fig. 6, a horizontal axis represents elapsed time [sec] and a vertical axis represents the magnitude of the signal.

As shown in Fig. 6, according to the electric bicycle of this related example, the command value Ca, which is output from the smooth power generation part 211, of the resultant command value C is dominant in an area A1 in which the crank rotation speed r is higher than the predetermined speed R. For this reason, even though peaks and valleys are formed on the signal (output value T) of the pedal torque detecting part 57, peaks and valleys are not formed on the current effective value and the current effective value has a uniform value in the area A1.

As described above, in the area A1 in which no boost request is present, motor torque is generated in the electric motor 60 by the power output from the smooth power generation part 211. Accordingly, the driving torque that is obtained by adding the motor torque to the pedal torque is obtained, so that a burden on a driver is reduced. Further, since the power supplied to the electric motor 60 is smoothed, the driver comfortably drives the electric bicycle.

In the electric bicycle according to this related example, a component of the command value Cb, which is output from the boost power generation part 212, of the resultant command value C is also increased in an area A2 in which the crank rotation speed r is lower than the predetermined speed R. For this reason, if peaks and valleys are formed on the signal T of the pedal torque detecting part 57, according to these peaks and valleys, peaks and valleys are also formed on an current effective value I in the area A2.

Meanwhile, in Fig. 6, reference character I0 denotes an current effective value I0 that is supplied to the electric motor of the electric bicycle according to the reference example described above with reference to Fig. 7. The electric bicycle according to the reference example does not include the boost power generation part, and the power supplied to the electric motor is determined by only the smooth power generation part.

In addition, according to the electric bicycle of this related example, the power in an area A3 is boosted as compared to the current effective value I0 of the reference example that is generated by only the smooth power generation part. That is, the boosted power is obtained in the area A2 in which the crank rotation speed is low where the driver wants to boost the driving torque.

Further, as shown in Fig. 6, the rising timing of the current effective value I0 of the electric bicycle according to the reference example is later than the rising timing of the current effective value I of the electric bicycle according to this related example. For example, when the smooth power generation part calculates the smooth power from an average value of the pedal torque, it is not possible to calculate an average value if time have not passed to some extent. For this reason, it is considered that timing in which the smooth power is output is late.

In comparison with this, according to the electric bicycle of this related example, the boost power generation part 212 does not calculate the power on the basis of an average value of the pedal torque and calculates the power by using the pedal torque itself. For this reason, it is possible to generate the boost power without waiting for the lapse of time. Accordingly, since it is possible to generate boost power as soon as a driver steps on the pedals 33 and 34, responsiveness is improved.

Moreover, the variation ΔPb of the boost power Pb per period of the pedal torque is larger than the variation ΔPa of the smooth power Pa per period of the pedal torque. That is, the boost power Pb more quickly changes than the smooth power Pa in response to the driver's operation for stepping on the pedals 33 and 34. For this reason, since the motor torque quickly changes in response to an operation for stepping on the pedals 33 and 34 when the boost is requested, the responsiveness to the driver's boost request for the driving torque is improved.

Further, according to the electric bicycle of this related example, as shown in Fig. 6, when the rotation speed r of the crank is lower than a predetermined value R1, the boost power generation part 212 generates power larger than the power that is generated when the rotation speed r of the crank is equal to or higher than the predetermined value R1. Accordingly, when the rotation speed of the crank is low where particularly large boost is required, large boost force is obtained. Meanwhile, the predetermined value R1 is a value that is smaller than the predetermined speed R used for the determination of the boost request.

Furthermore, according to the electric bicycle of this related example, as shown in Fig. 6, even when the rotation speed r of the crankshaft 41 is 0, the boost power generation part 212 outputs power (current effective value I2) to the electric motor 60. That is, according to this related example, when torque is applied to the pedals 33 and 34 even though the crankshaft 41 does not rotate, power is supplied to the electric motor 60. Accordingly, responsiveness is further improved.

Meanwhile, an example in which the rotation speed of the crankshaft 41 is employed as a parameter that is changed by the driver's operation when the boost is requested has been described in the above-mentioned related example.

However, the working speed of a driving portion driven by the rotation of the crankshaft 41 to which the pedals 33 and 34 are connected, such as the rotation speed or the moving speed of the chain 46, the rotation speed of the driving shaft 29, or the speed of the rear wheel 22, may be input to the boost request determining part 206. The variation of the working speed of the member of which working speed is varied as a result of the stepping of the pedals 33,34 by the user, such as the vehicular speed of the electric bicycle or wheel speed of the not-driving-wheel (the front wheel 21 in the illustrated example) may be input to the boost request determining part 206.

Alternatively, the variation of a driving portion driven by the rotation of the crankshaft 41 to which the pedals 33 and 34 are connected, such as the rotation angle or the moving distance of the chain 46, the rotation angle of the driving shaft 29, or the movement angle or the moving distance of the rear wheel 22, may be input to the boost request determining part 206. The variation of working of a member of which variation of the working is varied as a result of the stepping of the pedals 33, 34 by the user, such as the rotation angle of the non-dringing wheel (e.g. front wheel 21 in the illustrated example) may be input to the boost request dermining part 206.

The vehicular speed may be calculated by integrating an acceleration obtained from an acceleration sensor provided on the vehicle, or the vehicular speed may be calculated based on a timing information and a position information obtained from GPS (Global Positioning System) provided on the vehicle.

Meanwhile, for example, in circumstances in which the crank rotation speed r is high from the initial stage of pedaling, such as a case in which a wheel is rotated at a high speed from the beginning of pedaling with strong leg force, the smooth power output from the smooth power generation part 211 becomes dominant from the initial stage of elapsed time. For this reason, even in the initial stage of elapsed time, current effective value 11 supplied to the electric motor 60 may be smooth from the beginning.

## Claims

1. A controller (100) and a switch (56) for an electric bicycle (1) that generates assist torque by an electric motor (60), the controller comprising:

a control unit (105) that is adapted to supply power to the electric motor (60) according to a signal output from a pedal torque detecting part (57) that is adapted to detect torque input to pedals (33,34),
wherein the control unit (105) includes:

a smooth power generation part (11) that is adapted to generate power which is smoothed, the period of said smoothed power being longer than the period of the signal output from the pedal torque detecting part, and
a boost power generation part (112) that is adapted to generate power in response to a parameter that is changed by a driver's operation when a boost is requested, a variation of said boost power per period of the signal output from the pedal torque detecting part being larger than a variation of the smoothed power per period of the signal,

**characterized in that**
the switch (56) is connected to the control unit (105) and operable by a driver to produce a signal indicating a boost request,
the parameter that is changed by a driver's operation when a boost is requested is the signal indicating the boost request, and
the boost power generation part (112) is adapted to generate power that changes in response to the period of the signal output from the pedal torque detecting part (57).

2. The controller (100) and switch (56) according to claim 1,
wherein the boost power generation part (112) is adapted to generate power that changes in response to the amplitude of the signal output from the pedal torque detecting part (57).

3. A power unit (40) for an electric bicycle (1) comprising:

an electric motor (60);
a pedal torque detecting part (57) that is adapted to detect torque input to pedals (33,34); and
the controller (100) and switch (56) according to claim 1 or 2.

4. An electric bicycle (1) comprising:

a front wheel (21) and a rear wheel (22);
the power unit (40) according to claim 3 that is adapted to apply assist force to at least one of the front wheel (21) and the rear wheel (22); and
a battery (35) that is adapted to supply power to the power unit (40).

## Patentansprüche

1. Steuerungsvorrichtung (100) und Schalter (56) für ein Elektrofahrrad (1), die Unterstützungsmoment mittels eines Elektromotors (60) erzeugt, wobei die Steuerungsvorrichtung umfasst:

eine Steuerungs-Einheit (105), die so eingerichtet ist, dass sie dem Elektromotor (60) entsprechend einem Signal, das von einem Teil (57) zum Erfassen von Pedal-Drehmoment ausgegeben wird, der zum Erfassen von in Pedale (33,34) eingegebenem Drehmoment eingerichtet ist, Strom zuführt,

wobei die Steuerungs-Einheit (105) enthält:

einen Teil (11) für Erzeugung von geglättetem Strom, der so eingerichtet ist, das er Strom erzeugt, der geglättet ist, wobei die Periode des geglätteten Stroms länger ist als die Periode des von dem Teil zum Erfassen von Pedal-Drehmoment ausgegebenen Signals, und
einen Teil (112) für Erzeugung von Verstärkungs-Strom, der so eingerichtet ist, dass er Strom in Reaktion auf einen Parameter erzeugt, der durch Betätigung eines Fahrers geändert wird, wenn eine Verstärkung angefordert wird, wobei eine Änderung des Verstärkungs-Stroms pro Periode des von dem Teil zum Erfassen von Pedal-Drehmoment ausgegebenen Signals größer ist als eine Änderung des geglätteten Stroms pro Periode des Signals,

**dadurch gekennzeichnet, dass**
der Schalter (56) mit der Steuerungs-Einheit (105) verbunden ist und von einem Fahrer betätigt werden kann, um ein Signal zu erzeugen, das eine Verstärkungs-Anforderung anzeigt,
der Parameter, der durch Betätigung eines Fahrers geändert wird, wenn eine Verstärkung angefordert wird, das die Verstärkungs-Anforderung anzeigende Signal ist, und
der Teil (112) für Erzeugung von Verstärkungs-Strom so eingerichtet ist, dass er Strom erzeugt, der sich in Reaktion auf die Periode des von dem Teil (57) zum Erfassen von Pedal-Drehmoment ausgegebenen Signals ändert.

2. Steuerungsvorrichtung (100) und Schalter (56) nach Anspruch 1,
wobei der Teil (112) für Erzeugung von Verstärkungs-Strom so eingerichtet ist, dass er Strom erzeugt, der sich in Reaktion auf die Amplitude des von dem Teil (57) zum Erfassen von Pedal-Drehmoment ausgegebenen Signals ändert.

3. Antriebs-Einheit (40) für ein elektrisches Fahrrad (1), die umfasst:

einen Elektromotor (60);
einen Teil (57) zum Erfassen von Pedal-Drehmoment, der so eingerichtet ist, dass er in Pedale (33, 34) eingegebenes Drehmoment erfasst; sowie
die Steuerungsvorrichtung (100) und den Schalter (56) nach Anspruch 1 oder 2.

4. Elektrisches Fahrrad (1), das umfasst:

ein Vorderrad (21) und ein Hinterrad (22);

die Antriebs-Einheit (40) nach Anspruch 3, die so eingerichtet ist, dass sie Unterstützungskraft auf das Vorderrad (21) oder/und das Hinterrad (22) ausübt; sowie
eine Batterie (35), die so eingerichtet ist, dass sie der Antriebs-Einheit (40) Strom zuführt.

**Revendications**

1. Contrôleur (100) et commutateur (56) destinés à une bicyclette électrique (1) qui génère un couple d'assistance grâce à un moteur électrique (60), le contrôleur comprenant :

une unité de commande (105) qui est conçue pour fournir de l'énergie au moteur électrique (60) en fonction d'un signal délivré par un composant de détection de couple de pédalage (57) qui est conçu pour détecter le couple appliqué aux pédales (33, 34),
dans lequel l'unité de commande (105) inclut :

un composant de génération d'énergie lissée (11) qui est conçu pour générer de l'énergie qui est lissée, la période de ladite énergie lissée étant plus longue que la période du signal délivré par le composant de détection de couple de pédalage, et
un composant de génération d'énergie de renforcement (112) qui est conçu pour générer de l'énergie en réponse à un paramètre qui est modifié par une manœuvre du cycliste lorsqu'un renforcement est demandé, la variation de ladite énergie de renforcement par période du signal délivré par le composant de détection de couple de pédalage étant plus grande que la variation de l'énergie lissée par période du signal, **caractérisé en ce que** :

le commutateur (56) est relié à l'unité de commande (105) et manœuvrable par le cycliste pour générer un signal indiquant une demande de renforcement,
le paramètre qui est modifié par la manœuvre du cycliste lorsqu'un renforcement est demandé est le signal indiquant la demande de renforcement, et
le composant de génération d'énergie de renforcement (112) est conçu pour générer de l'énergie qui se modifie en réponse à la période du signal délivré par le composant de détection de couple de pédalage (57).

2. Contrôleur (100) et le commutateur (56) selon la revendication 1,
dans lequel le composant de génération d'énergie de renforcement (112) est conçu pour générer de l'énergie qui se modifie en réponse à l'amplitude du signal délivré par le composant de détection de couple de pédalage (57).

3. Unité de puissance (40) destinée à une bicyclette électrique (1), comprenant :

un moteur électrique (60),
un composant de détection de couple de pédalage (57) qui est conçu pour détecter le couple appliqué aux pédales (33, 34), et
le contrôleur (100) et le commutateur (56) conformes à la revendication 1 ou à la revendication 2.

4. Bicyclette électrique (1) comprenant :

une roue avant (21) et une roue arrière (22),
l'unité de puissance (40) conforme à la revendication 3, qui est conçue pour appliquer une force d'assistance à au moins l'une de la roue avant (21) et de la roue arrière (22), et
une batterie (35) qui est conçue pour fournir de l'énergie à l'unité de puissance (40).

## FIG. 1

UP

REAR ← → FRONT

DOWN

EP 2 783 970 B1

# FIG. 2

**41** → CRANKSHAFT → ONE-WAY CLUTCH **55**

**57** → TORQUE DETECTING PART

CRANK ROTATION DETECTING PART **58**

**100**

PEDAL STEPPING FORCE DETECTING UNIT **101**

CRANK ROTATION SPEED DETECTING UNIT **102**

MOTOR CONTROL UNIT

**105**

POWER SUPPLY UNIT **106**

BOOST SWITCH **56**

ELECTRIC MOTOR **60**

REDUCTION GEAR **82** → ONE-WAY CLUTCH **85**

**46** → CHAIN

TRANSMISSION OPERATION UNIT **93**

DRIVING SHAFT **29** → TRANSMISSION **91** → ONE-WAY CLUTCH **92** → REAR WHEEL **22**

EP 2 783 970 B1

13

## FIG. 3

EP 2 783 970 B1

| 101 | PEDAL STEPPING FORCE DETECTING UNIT |

| 102 | CRANK ROTATION SPEED DETECTING UNIT |

**105** MOTOR CONTROL UNIT

**56** BOOST SWITCH

**113** BOOST REQUEST DETERMINING PART

**111** SMOOTH POWER GENERATION PART

**112** BOOST POWER GENERATION PART

**114** COMMAND VALUE COMBINING PART

## FIG. 4

START

IS BOOST SWITCH TURNED ON?

No → **S11** NO BOOST REQUEST IS PRESENT

Yes → **S21** BOOST REQUEST IS PRESENT

**S12** OPERATE SMOOTH POWER GENERATION PART AND STOP BOOST POWER GENERATION PART

**S22** OPERATE SMOOTH POWER GENERATION PART AND OPERATE BOOST POWER GENERATION PART

**S13** ADD COMMAND VALUES

**S23** ADD COMMAND VALUES

**S14** SUPPLY POWER

**S24** SUPPLY POWER

# FIG. 5

201 — PEDAL STEPPING FORCE
DETECTING UNIT

205 — MOTOR CONTROL UNIT

102 — CRANK ROTATION
SPEED DETECTING
UNIT

213 — BOOST REQUEST
DETERMINING PART

211 — SMOOTH POWER
GENERATION PART

212 — BOOST POWER
GENERATION PART

214 — COMMAND VALUE
COMBINING PART

EP 2 783 970 B1

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011138138 A
- JP 2005335405 A
- JP 2004314753 A